# EUROPÄISCHE PATENTSCHRIFT

(11) **EP 2 802 514 B1**
(45) Veröffentlichungstag und Bekanntmachung des Hinweises auf die Patenterteilung: **22.03.2017**
(21) Anmeldenummer: 12740110.7
(22) Anmeldetag: 18.07.2012
(51) Int. Cl.: B29C 63/42, B65D 23/08

(54) **VERFAHREN ZUR HERSTELLUNG EINER FLASCHE MIT AUFGESCHRUMPFTER KUNSTSTOFFFOLIE**
METHOD FOR PRODUCING A BOTTLE HAVING A SHRINK-FITTED PLASTIC FILM
PROCÉDÉ DE FABRICATION D'UNE BOUTEILLE COMPRENANT UNE FEUILLE PLASTIQUE THERMORÉTRACTÉE

(30) Priorität: 09.01.2012 DE 102012200187
(43) Veröffentlichungstag der Anmeldung: 19.11.2014
(73) Patentinhaber: Henkel AG & Co. KGaA, 40589 Düsseldorf (DE)
(72) Erfinder: NOVER, Andreas, 41516 Grevenbroich (DE)
(86) Internationale Anmeldenummer: PCT/EP2012/064050
(87) Internationale Veröffentlichungsnummer: WO 2013/104433

(56) Entgegenhaltungen:
- EP-A1- 1 083 129
- EP-A1- 1 238 916
- JP-A- 2002 179 029
- US-A1- 2010 173 229

## Beschreibung

Die vorliegende Erfindung betrifft ein Verfahren zur Herstellung einer Flasche mit einer Ummantlung aus einer auf die Mantelfläche der Flasche aufgeschrumpften Kunststofffolie wobei die Flasche an ihrer Mantelfläche wenigstens eine in das Flascheninnere hineinragende Vertiefung oder Öffnung umfasst und wobei der Bereich der aufgeschrumpften Kunststofffolie, der die Vertiefung oder Öffnung der Flasche einfasst, mittels Laserschneiden erzeugt ist.

### Stand der Technik

Flaschen sind hinlänglich als Behältnis für fließ- oder schüttfähige Produkte im Stand der Technik bekannt. Je nach Verwendungszweck oder Größe der Flasche kann es sinnvoll sein, eine Flasche mit einem Handgriff oder einer Griffmulde zu versehen, um so die Handhabung für den Benutzer zu erleichtern.

Neben einer guten Handhabung steigen gleichzeitig ebenfalls die Anforderungen an den ästhetischen Eindruck den eine Flasche einem Benutzer vermittelt. Hier kommen zunehmend so genannte Schrumpffolien zum Einsatz, die meistens vollständig um den Flaschenmantel gelegt werden und welche durch die vollständige, flächige Bedruckbarkeit der Folie eine graphische Gestaltung des gesamten Flaschenmantels erlauben.

Ein Problem in diesem Zusammenhang besteht nun darin, dass die aus ergonomischen Gründen gewollten Griffmulden oder Handgriffe in einer Flasche nicht durch die aus gestalterischen Gründen wünschenswerten Schrumpffolien überdeckt werden.

Eine Flasche mit Grifföffnung sowie ein Verfahren zur deren Herstellung sind aus der EP 1 083 129 A1 bekannt.

### Aufgabe der Erfindung

Der Erfindung liegt somit die Aufgabe zugrunde, eine mit einer Schrumpffolie versehene

Flasche mit einem benutzbaren Handgriff oder Griffmulde bereitzustellen.

Diese Aufgabe wird durch ein Verfahren nach Anspruch 1 zur Herstellung einer Flasche mit einer Schrumpffolie gelöst.

Das Verfahren zur Herstellung einer Flasche mit einer Ummantlung aus einer schrumpfbaren Kunststofffolie, wobei die Flasche an ihrer Mantelfläche wenigstens eine in das

Flascheninnere hineinragende Griffmulde oder Grifföffnung aufweist, umfasst die folgenden Schritte:
a. Herstellen eines Schlauchs aus der schrumpfbaren Kunststofffolie,
b. Aufziehen des Schlauchs auf die Flasche,
c. Aufschrumpfen der Kunststofffolie auf die Flasche,
d. Laserschneiden des Bereichs der schrumpfbaren Kunststofffolie, der die Griffmulde oder Grifföffnung der Flasche überdeckt,
e. Absaugen des ausgeschnittenen Bereichs mittels eines Gebläses

### (a) Schlauchherstellung

Die Herstellung eines Schlauchs aus einer schrumpfbaren Kunststofffolie ist grundsätzlich aus dem Stand der Technik bekannt. Hierbei wird eine bedruckte, thermisch verformbare Kunststofffolie entlang ihrer Längsnaht zu einem Schlauch verklebt oder verschweißt und nachfolgend auf einer Hülse zu einer Rolle oder flachliegend konfektioniert.

### (b) Aufziehen des Schlauchs auf die Flasche

Beim Aufziehen des Schlauchs aus schrumpfbarer Kunststofffolie wird der Schlauch zunächst nach individueller Rapportlänge oder nach vorkonfektioniertem, flachliegenden Zuschnitten vereinzelt um nachfolgend mit den aus dem Stand der Technik bekannten Verfahren über die Flasche gezogen zu werden.

### (c) Aufschrumpfen des Schlauchs auf die Flasche

Der auf die Flasche aufgezogene Schlauch aus schrumpfbarer Kunststofffolie wird dann thermisch erhitzt und passt sich dadurch der Flaschenkontur an, bis der Schlauch eng an der Flaschenkontur anliegt.

### (d) Laserschneiden

Schließlich wird der von der Kunststofffolie überdeckte Griffmuldenbereich mittels Laserschneiden herausgeschnitten. Das Aussparen der Handgriffmulde wird bevorzugt mit einem 60W CO2-Laser durchgeführt, womit sich glatte Schnittflächen in der Kunststofffolie erzeugen lassen, ohne die darunter liegenden Flaschenwände zu beschädigen. Der herausgeschnittene Abschnitt wird mit einem Vakuumgebläse von der Flasche abgesaugt.

### (e) Gebläse

Das Absaugen des herausgeschnittenen Abschnitts kann beispielsweise mittels geeigneter Druckluftinjektoren oder Hydraulikpumpen, welche als Vakuumgebläse ausgebildet sind, erzeugt werden. Die Vakuumgebläse sind so konfiguriert, dass sich die herausgeschnittene Abschnitt aus der Kunststofffolie nach Abschluss des Laserschneidens von der Flasche absaugen lässt.

### Flasche

Eine Flasche im Sinne dieser Anmeldung ist ein verschließbares, im wesentlichen formstabiles Behältnis zur Aufnahme eines fließ- oder schüttfähigen Produktes, welches ein durch einen Boden und einen Mantel geformtes Füllvolumen umfasst wobei das Füllvolumen durch eine durch den Mantel in Gestalt eines sich zur Öffnung hin verjüngenden Flaschenhalses ausgeformte Öffnung befüll- bzw. entleerbar ist, wobei der Querschnitt des Bodens größer ist als der Querschnitt der Öffnung.

Die Flasche weist insbesondere ein Füllvolumen zwischen 50ml und 5.000ml, bevorzugt zwischen 250ml und 3.000ml, besonders bevorzugt zwischen 500ml und 2.500ml auf.

Die Flasche ist vorzugsweise aus einem Kunststoff geformt. Es ist jedoch auch möglich, die Flasche insbesondere bei Unverträglichkeit von Kunststoff mit dem in der Flasche abzufüllenden Produkt aus einem anderen Material, wie beispielsweise Glas, Pappe, Karton, Metall, Keramik oder beliebigen Kombinationen hiervon zu bilden.

Die Wandstärke der Flasche ist so gewählt, dass die Flasche im Wesentlichen formstabil ist. In einer Ausführungsform der Flasche können die Wände bzw. die Mantelfläche elastisch verformbar sein, um einen Druck auf die in der Flasche befindlichen Produkte auszuüben und hierdurch die Abgabe von Produkt aus dem Behältnis zu unterstützen.

Die Flasche kann in einer weiteren vorteilhaften Ausgestaltungsform der Erfindung auch als Zwei- oder Mehrkammerbehältnis ausgebildet sein. Vorteilhafter Weise beinhalten die Kammern dann jeweils voneinander verschiedene Produkte. So ist es beispielsweise möglich, in einer Kammer ein flüssiges Produkt und in einer weiteren Kammer ein festes, insbesondere pulverförmig oder granulares Produkt zu bevorraten. Weitere Beispiele von in einer Zweikammerflasche befindlichen Produktkombinationen können der folgenden Tabelle entnommen werden.

| **Flüssig** | **Flüssig** | **Flüssig** | **Festes Produkt** | **Festes Produkt** | **Festes Produkt** |
|---|---|---|---|---|---|
| Waschmittel A | Waschmittel B | Waschmittel A | Waschmittel B | Waschmittel A | Waschmittel B |
| Waschmittel | Weichspüler | Weichspüler | Waschmittel | | |
| Waschmittel | Bleiche | Bleiche | Waschmittel | | |
| Spülmittel A | Spülmittel B | Klarspüler | Spülmittel | | |
| Spülmittel | Bleiche | Bleiche | Spülmittel | | |
| Reinigungsmittel A | Reinigungsmittel B | Waschmittel | Weichspüler | | |

Vorteilhafter Weise ist die Flasche aus einem entsprechenden Preform in einem Blasformverfahren einstückig herstellbar. Die Grifföffnung oder die Griffmulde wird in dem Blasformverfahren integral aus dem bzw. in den Rumpf der Flasche geformt. Hierdurch ist die Flasche mit Grifföffnung oder Griffmulde in nur einem Herstellungsschritt formbar.

### Grifföffnung

Eine Grifföffnung im Sinne dieser Anmeldung ist eine als Teil der Flasche ausgeformte Tragevorrichtung, die ein zumindest teilweises Umgreifen durch die Hand des Benutzers zum erleichterten Transport und Handhabung der Flasche erlaubt, wobei die Grifföffnung eine mit dem Rumpf der Flasche kommunizierende Kammer zur Aufnahme von Produkt bildet. Die Grifföffnung kann insbesondere bügelförmig ausgeformt sein. Bei einer bügelförmigen Grifföffnung sind zwei Verbindungsöffnungen zwischen Rumpf und Kammer ausgebildet.

### Griffmulde

Ein Handgriff im Sinne dieser Anmeldung ist eine als Teil der Flasche ausgeformte Tragevorrichtung, die zumindest einen teilweisen Eingriff durch die Hand des Benutzers zum erleichterten Transport und Handhabung der Flasche erlaubt.

### Schrumpffolie

Als Schrumpffolie wird eine durch Streckung vorbehandelte, thermoplastische Folie verstanden, die durch Wärmeeinwirkung schrumpft bzw. sich zusammenzieht.

Die Schrumpffolie sowie die Flasche sind dabei in derart konfiguriert, dass ein guter physikalischer Kontakt zwischen Schrumpfetikett und der Flasche dauerhaft gewährleistet ist.

Bevorzugt sollte die Schrumpffolie innerhalb des Temperaturbereiches von etwa 50 °C bis 90°C in einem Ausmaß von mindestens 5% in Richtung der Orientierung und mit genügender Kraft schrumpfen, um eine fest sitzende, eng anliegende Haut um die innerhalb der Umhüllung eingeschlossene Flasche zu ergeben.

Die Schrumpffolie hat bevorzugt eine Stärke zwischen 5 µm und 100 µm, besonders bevorzugt zwischen 7,5 µm und 75 µm, insbesondere bevorzugt zwischen 10 µm und 60 µm. Bei der Schrumpffolie kann es sich beispielsweise um eine co-extrudierte Folie, eine Dehn- bzw. Streckfolie, eine Extrusionsfolie, eine Flachfolie, eine gestreckte bzw. orientierte Folie, eine Gießfolie, eine Kalanderfolie oder eine Schaumstofffolie.

Es ist bevorzugt, die Schrumpffolie einlagig um die Flasche herum anliegend anzuordnen.

Das Material aus dem die Schrumpffolie gebildet ist, sollte eine gute Bedruckbarkeit aufweisen. Insbesondere kann die Schrumpffolie bedruckt sein, besonders bevorzugt ist es, dass die Schrumpffolie vollflächig bedruckt ist.

Es ist des weiteren bevorzugt, dass die Schrumpffolie im Wesentlichen vollflächig bedruckt und somit im Wesentlichen opak ausgebildet ist, wodurch er eine entsprechend gute UV-Barriere bildet, die den Inhalt der Flasche vor UV-Strahlung aus der Umgebung schützt. Dies ist insbesondere von Vorteil bei Packgütern mit UV-sensiblen Inhaltsstoffen, wie Enzymen, Vitaminen, Farb- oder Duftstoffen etc..

Die Schrumpffolie kann auch spezielle UV-Barrierestoffe enthalten. Dies kann insbesondere bei der Verwendung von transparenten Sichtfenstern bzw. Sichtbereichen von Vorteil sein, um ein UV-sensibles Packgut zu schützen.

Es ist grundsätzlich auch möglich für die Erfindung so genannte Strech-Folien zu verwenden, die im Sinne der vorliegenden Anmeldung auch als Schrumpffolie zu klassifizieren sind. Unter einer Dehnfolie wird eine Folie mit Haftneigung verstanden, die sich von Hand oder maschinell gedehnt, eng um das Packmittel legen lässt. Die Stretchfolie sowie die Flasche sind dabei in derart konfiguriert, dass ein guter physikalischer Kontakt zwischen Stretch-Folie und der Flasche dauerhaft gewährleistet ist. Bevorzugt sollte die Stretch-Folie aus dehnbaren Materialien gebildet sein und sich mit genügender Kraft zusammenziehen, um eine fest sitzende, eng anliegende Haut um das innerhalb der Umhüllung eingeschlossene Packmittel zu ergeben.

## Patentansprüche

1. Verfahren zur Herstellung einer Flasche mit einer Ummantlung aus einer schrumpfbaren Kunststofffolie wobei die Flasche an ihrer Mantelfläche wenigstens eine in das Flascheninnere hineinragende Griffmulde oder eine Grifföffnung umfasst,
umfassend die folgenden Schritte:
• Herstellen eines Schlauchs aus der schrumpfbaren Kunststofffolie,
• Aufziehen des Schlauchs auf die Flasche,
• Aufschrumpfen der Kunststofffolie auf die Flasche,
• Laserschneiden des Bereichs der schrumpfbaren Kunststofffolie, der die Griffmulde oder Grifföffnung der Flasche überdeckt,
• Absaugen des ausgeschnittenen Bereichs mittels eines Gebläses.

2. Verfahren nach Anspruch 1, **dadurch gekennzeichnet, dass** die Schrumpffolie eine Stärke zwischen 5 µm und 100 µm, besonders bevorzugt zwischen 7,5 µm und 75 µm, insbesondere bevorzugt zwischen 10 µm und 60 µm aufweist.

3. Verfahren, nach einem der vorherigen Ansprüche, **dadurch gekennzeichnet, dass** die Schrumpffolie innerhalb des Temperaturbereiches von etwa 50 °C bis 90°C in einem Ausmaß von mindestens 5% in Richtung der Orientierung schrumpft.

4. Verfahren nach einem der vorherigen Ansprüche, **dadurch gekennzeichnet, dass** das Laserschneiden mit einem 60W CO2-Laser durchgeführt wird.

## Claims

1. A method for producing a bottle having a cover made of a shrinkable plastics film, wherein the lateral surface of the bottle comprises at least one recessed handle projecting into the bottle interior or a handle opening,
said method comprising the following steps:
• producing a tube from the shrinkable plastics film,
• drawing the tube onto the bottle,
• shrink-fitting the plastics film onto the bottle,
• laser-cutting the region of the shrinkable plastics film which covers the recessed handle or handle opening of the bottle,
• extracting the cut-out region by means of a blower.

2. The method according to claim 1, **characterized in that** the shrink film has a thickness of between 5 µm and 100 µm, particularly preferably between 7.5 µm and 75 µm and more particularly preferably between 10 µm and 60 µm.

3. The method according to one of the preceding claims, **characterized in that** the shrink film shrinks by at least 5% in the direction of orientation within the temperature range of from approximately 50°C to 90°C.

4. The method according to one of the preceding claims, **characterized in that** the laser-cutting is carried out using a 60 W CO2 laser.

## Revendications

1. Procédé de fabrication d'une bouteille avec un revêtement constitué d'une feuille de plastique rétractable, où la bouteille comprend au niveau de sa surface latérale au moins une moulure de poignée vers l'intérieur de la bouteille ou une ouverture de saisie,
comprenant les étapes suivantes :
• fabrication d'un tuyau sur la bouteille,
• collage du tuyau sur la bouteille,
• rétractation de la feuille de plastique sur la bouteille,
• découpe par laser de la zone de la feuille de plastique rétractable qui recouvre la moulure de poignée ou l'ouverture de saisie de la bouteille,
• aspiration sur la zone découpée au moyen d'une soufflerie.

2. Procédé selon la revendication 1, **caractérisé en ce que** la feuille de plastique rétractable présente une épaisseur entre 5 µm et 100 µm, plus préférentiellement entre 7,5 µm et 75 µm et en particulier entre 10 µm et 60 µm.

3. Procédé selon l'une quelconque des revendications précédentes, **caractérisé en ce que** la feuille de plastique rétractable se rétracte dans un domaine de température entre environ 50°C et 90°C à hauteur d'au moins 5 % dans sa direction d'orientation.

4. Procédé selon l'une quelconque des revendications précédentes, **caractérisé en ce que** la découpe par laser est effectuée avec un laser CO2 60 W.
